# EUROPEAN PATENT SPECIFICATION

(11) **EP 1 474 606 B1**
(45) Date of publication and mention of the grant of the patent: **21.03.2007**
(21) Application number: 03704321.3
(22) Date of filing: 08.01.2003
(51) Int. Cl.: F03B 13/16

(54) **GRID CONSTRUCTION TO GATHERING OF WAVE AGGREGATES**
GITTERKONSTRUKTION ZUM SAMMELN VON WELLENAGGREGATEN
STRUCTURE DE GRILLE DESTINEE A RECUEILLIR L'ENERGIE DES VAGUES

(30) Priority: 09.01.2002 DK 200200032
(43) Date of publication of application: 10.11.2004
(73) Proprietor: SKAARUP, Erik, DK-2820 Gentofte (DK)
(72) Inventor: ASIF, Akbar, DK-2920 Charlottenlund (DK)
(74) Representative: Holme, Edvard
(86) International application number: PCT/DK2003/000009
(87) International publication number: WO 2003/062634

(56) References cited:
- FR-A- 1 021 189
- US-A- 3 758 788
- US-A- 4 249 084
- US-A- 4 341 074

## Description

### Background for the invention

The purpose with the invention "Grid construction for gathering wave energy aggregates" is it easier to place and service wave energy aggregates, achieve lower cost on the construction, but to achieve the same amount of kW out of the waves of the sea and even on a smaller area.

The grid construction make it possible, to achieve lower weight because of the units get smaller but strong enough to resist the forces of the sea on the smaller size (wave front). A smaller size do that one to achieve the same amount of kW has to use more units. This leads to a bigger production (mass production) that makes it cheaper to achieve the same kW out of the waves.

One will save about 70-75 % material in the single wave energy aggregates of half size.

The invention is in the first place thought to be used for specific wave energy aggregate (see US-A-4 249084) but can also be used to nearly any other floating wave energy aggregates.

In the calculations to find the necessary distance between wave energy aggregates at sea, it was clear, that a wave energy park to up a lot of space - to much space. The floating wave energy devices must not be able to hit into each other, when there is no waves and no wind.

To be close to each other, without hitting each other, they have to be fixed with something, there in the same time is flexible. The power of the sea is so enormous, that it is better to bend for the forces than to try to resist them. The construction price is also much cheaper.

The normally trend in wave energy aggregates is built on the principle from wind energy industry: *get as many MW on fewest items.* A given width of wave front is containing a certain amount of energy. The double width is containing the double as much energy. So - built double as big.

To construct double width wave energy aggregate in a traditional way, which is able to resist the very big forces, it takes material in at least third potent, 2 x 2 x 2 = 8 times. The wave energy aggregate is not only double as width, but also double as high and double as deep in the bearing dimensions of material. But one only achieves the double energy of energy.

Actually there are used 6 times more material to exchange the two single wave energy aggregates to a new double width wave energy aggregate.

The grid construction is a flexible grid; which is fulfilling the demands for a park of wave energy aggregates to take up less space without the aggregates can hit each other.

The grid constructions consist of sticks, which are holding the aggregates fixed in horizontals direction, but flexible in vertical direction. When this achievement is reached, then you as well can go a step further - make the things smaller (to a limit fitted to the conditions) and by this achieve price- and weight reduction with all its advantage.

With the new flex grid constriction is then much cheaper. It can be adjusted in series and sizes to any sea area and to the demand of MW there is wished for.

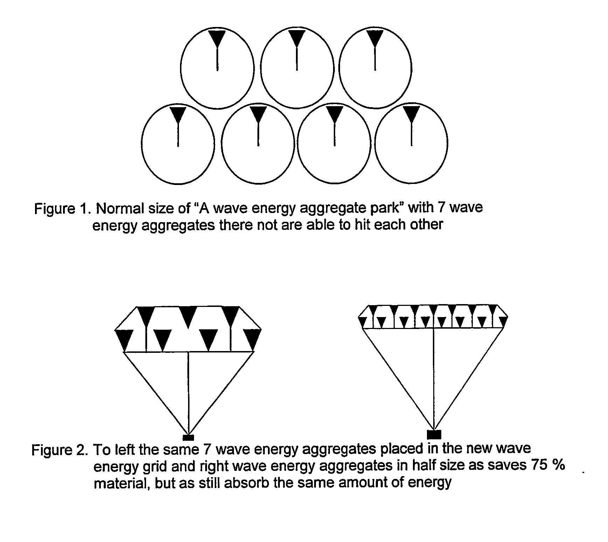

## Claims

1. A plant comprising free-floating wave energy aggregates units for converting wave energy to another energy form wherein a plurality of small single units of wave energy aggregates is placed in a flexible grid construction, **characterised in that** said plurality of small single units is connected by means of sticks holding the units fixed in a horizontal direction but flexible in vertical direction.

2. A plant according to claim 1, **characterised in that** the plurality of small single units of the aggregate unit are placed in two staggered parallel rows arranged to take up the minimum space without the plurality of small single units hit each other.

3. A plant according to claim 1, **characterised in that** the wave energy is converted to electricity, air-or fluid pressure or a mechanical force.

4. A plant according to claim 1, **characterised in that** the grid construction has damping plates or rudders in different places.

5. A plant according to claim 1, **characterised in that** the grid construction further has rods that have an additional form of built in flexibility.

6. A plant according to claim 5, **characterised in that** the additional form of built-in flexibility is metallic or hydraulic.

7. A plant according to claim 1, **characterised in that** the grid construction has a built in shared floating control or energy gathering unit.

8. A plant according to claim 1, **characterised in that** the grid construction is fixed to the seabed with one or more anchors or a bottom fixed construction.

9. A plant according to claim 1, **characterised in that** the grid construction is configured to float by itself for use as a platform.

10. A plant according to claim 9, **characterised in that** the platform comprises a wind turbine or hydrogen station.

## Patentansprüche

1. Anlage mit frei schwimmenden Wellenenergieaggregat-Einheiten zum Umwandeln von Wellenenergie in eine andere Energieform, wobei eine Vielzahl von kleinen einzelnen Einheiten von Wellenenergieaggregaten in einer flexiblen Gitterkonstruktion angeordnet ist,
**dadurch gekennzeichnet, dass**
die Vielzahl von kleinen einzelnen Einheiten mittels Stangen verbunden ist, die die Einheiten in einer horizontalen Richtung fest, aber in vertikaler Richtung flexibel halten.

2. Anlage nach Anspruch 1, **dadurch gekennzeichnet, dass** die Vielzahl von kleinen einzelnen Einheiten der Aggregateinheit in zwei gestaffelten parallelen Reihen angeordnet sind und eingerichtet, um den minimalen Raum einzunehmen, ohne dass sich die kleinen einzelnen Einheiten gegenseitig treffen.

3. Anlage nach Anspruch 1, **dadurch gekennzeichnet, dass** die Wellenenergie umgewandelt wird zu Elektrizität, Luft- oder Flüssigkeitsdruck oder einer mechanischen Kraft.

4. Anlage nach Anspruch 1, **dadurch gekennzeichnet, dass** die Gitterkonstruktion an verschiedenen Stellen Dämpfplatten oder Ruder aufweist.

5. Anlage nach Anspruch 1, **dadurch gekennzeichnet, dass** die Gitterkonstruktion weiterhin Stangen hat, die eine zusätzliche Form von eingebauter Flexibilität haben.

6. Anlage nach Anspruch 5, **dadurch gekennzeichnet, dass** die zusätzliche Form von eingebauter Flexibilität metallisch oder hydraulisch ist.

7. Anlage nach Anspruch 1, **dadurch gekennzeichnet, dass** die Gitterkonstruktion eine eingebaute gemeinsame Steuerungs- und Energiesammeleinheit hat.

8. Anlage nach Anspruch 1, **dadurch gekennzeichnet, dass** die Gitterkonstruktion am Meeresgrund mit einem oder mehreren Ankern oder einer am Boden befestigten Konstruktion verankert ist.

9. Anlage nach Anspruch 1, **dadurch gekennzeichnet, dass** die Gitterkonstruktion so eingerichtet ist, dass sie zur Verwendung als Plattform selbstschwimmend ist.

10. Anlage nach Anspruch 9, **dadurch gekennzeichnet, dass** die Plattform eine Windturbine oder Wasserstoffstation aufweist.

## Revendications

1. Installation comportant des unités de récupération d'énergie des vagues, librement flottantes, pour convertir l'énergie des vagues en une autre forme d'énergie, dans laquelle une pluralité de petites unités uniques de récupération d'énergie des vagues sont placées dans une construction de grille souple, **caractérisée en ce que** ladite pluralité de petites unités uniques est reliée par l'intermédiaire de perches supportant les unités fixées dans une direction horizontale mais souples dans une direction verticale.

2. Installation selon la revendication 1, **caractérisée en ce que** la pluralité de petites unités uniques de l'unité de récupération sont placées dans deux rangées parallèles étagées agencées pour prendre l'espace minimum sans que la pluralité de petites unités uniques ne se heurtent les unes les autres.

3. Installation selon la revendication 1, **caractérisée en ce que** l'énergie des vagues est convertie en électricité, pression d'air ou de fluide, ou en une force mécanique.

4. Installation selon la revendication 1, **caractérisée en ce que** la construction de grille a des plaques d'amortissement ou des empennages dans différents emplacements.

5. Installation selon la revendication 1, **caractérisée en ce que** la construction de grille comporte en outre des tiges qui ont une forme supplémentaire de souplesse intégrée.

6. Installation selon la revendication 5, **caractérisée en ce que** la forme supplémentaire de souplesse intégrée est métallique ou hydraulique.

7. Installation selon la revendication 1, **caractérisée en ce que** la construction de grille a une commande flottante partagée intégrée ou une unité de rassemblement d'énergie intégrée.

8. Installation selon la revendication 1, **caractérisée en ce que** la construction de grille est fixée sur le fond de la mer à l'aide d'une ou plusieurs ancres ou sur une construction fixée au fond.

9. Installation selon la revendication 1, **caractérisée en ce que** la construction de grille est configurée pour flotter par elle-même pour utilisation en tant que plateforme.

10. Installation selon la revendication 9, **caractérisée en ce que** la plateforme comporte une éolienne ou un poste d'hydrogène.
